# EUROPÄISCHE PATENTSCHRIFT

(11) **EP 3 086 087 B1**
(45) Veröffentlichungstag und Bekanntmachung des Hinweises auf die Patenterteilung: **07.07.2021**
(21) Anmeldenummer: 15164324.4
(22) Anmeldetag: 20.04.2015
(51) Int. Cl.: G01B 21/08, G01N 25/72, G01B 11/06

(54) **FOTOTHERMISCHES MESSGERÄT SOWIE VERFAHREN ZUR FOTOTHERMISCHEN MESSUNG**
PHOTO THERMAL MEASURING DEVICE AND METHOD FOR PHOTO THERMAL MEASURING
APPAREIL DE MESURE PHOTOTHERMIQUE ET PROCÉDÉ DE MESURE PHOTOTHERMIQUE

(43) Veröffentlichungstag der Anmeldung: 26.10.2016
(73) Patentinhaber: OptiSense GmbH & Co. KG, 45721 Haltern am See (DE)
(72) Erfinder: Schriever, Clemens, 48301 Nottuln (DE); Nelke, Georg, 45721 Haltern am See (DE)
(74) Vertreter: Lorenz, Bernd Ingo Thaddeus

(56) Entgegenhaltungen:
- EP-A2- 0 609 193
- WO-A1-01/44752
- WO-A2-2011/137547
- DE-A1- 19 520 788
- FR-A1- 3 007 831
- None

## Beschreibung

Die Erfindung betrifft ein fotothermisches Messgerät zur Messung von Schichtdicken, insbesondere von Lackschichtdicken. Weiterhin betrifft die Erfindung ein Verfahren zur fotothermischen Messung mit einem fotothermischen Messgerät.

Aus der WO 2011/137547 A2 ist eine fotothermische Messung bekannt, wobei Blitzlampen oder LEDs als Anregungslichtquelle benutzt werden.

Bekanntermaßen wird bei fotothermischen Messungen ein Anregungslichtpuls mithilfe eines Messkopfes auf eine Probe geworfen. Aufgrund der hohen Energiedichte des Anregungslichtpulses erwärmt sich die Probe, wodurch Wärmestrahlung von der Probe zurückgeworfen und mittels des Messkopfes aufgefangen werden kann. Anhand des ermittelten Intensitätsverlaufes der Wärmestrahlung können dann die Schichtdicken der Probe berechnet werden. Die in der Praxis bekannten fotothermischen Messgeräte weisen dabei entweder fest angeordnete Messköpfe auf oder aber sie verfügen über maschinell verfahrbare Messköpfe. Mit der Hand führbare Messköpfe zwecks Ermöglichung manuell durchgeführter Messungen sind ebenfalls bekannt, doch muss hierzu die führende Hand abgestützt werden. Folglich handelt es sich bei diesen Messungen zwar um handgeführte Messungen, nicht aber um echte Freihandmessungen, bei denen die führende Hand bzw. der führende Arm nicht abgestützt werden muss.

Größtes Hindernis von Freihandmessungen - ohne Einschränkungen aufgrund von Schutznormen hinnehmen zu müssen - ist dabei die Messzeit bis zu einigen wenigen Sekunden. Selbst wenn der Nutzer in dieser Zeit sich auf eine ruhig gehaltene Hand konzentriert, erfährt der Messkopf dennoch verschiedenste Bewegungskomponenten in alle Raumrichtungen, welche zwar kaum sichtbar sind, aber dennoch häufig zur völligen Unbrauchbarkeit der jeweiligen Messung führen. Diese Bewegungskomponenten in alle Raumrichtungen sind auch als Verwackeln bekannt. Hier ist zu unterscheiden zwischen einer Bewegungskomponente entlang der Strahlachse einerseits und zwischen Bewegungskomponenten parallel zur Oberfläche der Probe andererseits. Insbesondere die letztgenannten Bewegungskomponenten können zu erheblichen Messwertstreuungen führen. In der Praxis bedeutet dies, dass eine Vielzahl von Messwerten aufgenommen werden muss, um die große Varianz der Messwerte zu kompensieren. Werden lediglich einige wenige Messungen aufgenommen, so ist das Ergebnis mit einiger Unsicherheit behaftet.

Der Erfindung liegt daher das technische Problem zugrunde, beispielsweise für eine fertigungsnahe Qualitätskontrolle von Lackschichten, ein fotothermisches Messgerät anzugeben, bei welchem die Zuverlässigkeit der Messungen erhöht wird. Vorzugsweise ist es Aufgabe, die Zuverlässigkeit soweit zu erhöhen, dass auch fotothermische Messungen mit freihändig geführten Messköpfen ermöglicht werden. Weiterhin liegt der Erfindung das technische Problem zugrunde, ein Verfahren zur fotothermischen Messung anzugeben, welches die Zuverlässigkeit der fotothermischen Messung erhöht und insbesondere auch fotothermische Messgeräte mit freihändig geführten Messköpfen erlaubt.

Zur Lösung des technischen Problems lehrt die Erfindung ein fotothermisches Messgerät nach Anspruch 1.

Die Begrifflichkeit "Messkopf' meint den Teil des fotothermischen Messgerätes, welcher das Linsensystem umfasst. Der Messkopf kann separat ausgebildet sein, so dass er über ein Kabel mit einer Grundeinheit verbunden ist. Der Messkopf kann aber auch in der Grundeinheit verbaut sein bzw. kann die Grundeinheit selber sein, so dass der Messkopf allenfalls am Linsensystem erkennbar ist. Vorteilhafterweise weist die Grundeinheit einen Griff und besonders vorzugsweise einen Akku auf. In Verbindung mit der Möglichkeit der reinen Freihandmessung wird so ein vollumfänglich mobiles fotothermisches Messgerät geschaffen.

Der Begriff "Anregungsfläche" meint die Querschnittsfläche des Anregungslichtes im Fokus. Als Rand der Anregungsfläche sind diejenigen Stellen definiert, bei welchen die maximale Intensität des Anregungslichtstrahls auf den Wert 1/e² und somit auf etwa 13 % des Hauptmaximums der Anregungsfläche gesunken ist. Die Anregungsfläche meint insbesondere eine zusammenhängende Fläche und damit nicht eine Vielzahl von Flächen. Vorzugsweise ist die Anregungsfläche durchgehend und weist somit keine Einschlüsse mit Bereichen von weniger als 13 % Intensität bezüglich des Hauptmaximums auf.

Das Wort "Messfläche" ist anders als die Anregungsfläche definiert. Die Messfläche wird durch die aktive Oberfläche des Infrarot-Detektors sowie durch den Abbildungsmaßstab bestimmt. Der Abbildungsmaßstab wiederum wird durch die einsammelnde Optik des Linsensystems sowie durch die Position des Infrarot-Detektors zur einsammelnden Optik über die Linsengleichung definiert. Die Messfläche liegt bevorzugt in der Ebene der Anregungsfläche und wird besonders bevorzugt von der Anregungsfläche umschlossen.

Der Erfindung liegt die Erkenntnis zugrunde, dass die Ursache für die bisherige Unbrauchbarkeit der Messungen von handgeführten Messköpfen zu einem großen Teil in dem natürlichen Verwackeln mit der Hand begründet ist. Dies ist grob vergleichbar mit verwackelten fotografischen Aufnahmen bei zu großen Belichtungszeiten. Bisher wurde als Anregungslicht zwecks Erreichung einer größeren Leistungsdichte und damit tendenziell zuverlässigeren Messungen verhältnismäßig stark auf eine kleinere Anregungsfläche im µm²-Bereich gebündelt. Diese kleinere Anregungsfläche in Verbindung mit dem Verwackeln erzeugt jedoch eine örtlich sehr inhomogene Anregung der Probenoberfläche. Gleichzeitig führt das Verwackeln auch dazu, dass die Messfläche in mehr oder weniger willkürlicher Art und Weise über die inhomogen angeregten Probenoberflächen hinweg gleitet. In der Folge wird die freihändige fotothermische Messung unzuverlässig. Dieses Problem wird dadurch behoben, dass die Anregungsfläche 8 mm² bis 200 mm² beträgt. Gemäß anderen Ausführungsformen beträgt die Anregungsfläche 20 mm² bis 150 mm². Besonders bevorzugt ist eine Anregungsfläche zwischen 40 mm² und 120 mm². Die bevorzugtesten Ausführungsformen weisen eine Anregungsfläche zwischen 60 mm² und 100 mm² auf. Dies widerspricht dem in der Fotothermik bisher üblichen Grundsatz, kleine Anregungsflächen zu verwenden, deutlich. Insofern stellt die Erfindung eine Abkehr von bisherigen Grundsätzen dar. Insbesondere wurde überraschend gefunden, dass die Vorteile einer großflächigen, aber entsprechend intensitätsarmen Anregung diejenigen Vorteile einer intensitätsreichen, aber kleinflächigen Anregung im Falle von Freihandmessungen überwiegen.

Es liegt im Rahmen der Erfindung, dass die Anregungsfläche etwa kreisförmig oder etwa quadratisch ist. Gemäß einer anderen Ausführungsform ist die Anregungsfläche länglich ausgebildet und weist ein Breiten-zu-Längen-Verhältnis auf, welches kleiner als 1:2, vorzugsweise kleiner als 1:4 und besonders vorzugsweise kleiner als 1:6 ist. Dem liegt die Erkenntnis zugrunde, dass eine länglich ausgebildete Anregungsfläche sich sehr gut für gleichmäßige, aber hohe Relativgeschwindigkeiten eignet. Hiermit sind Vorrichtungen gemeint, bei welchen in der Regel die Probe zum Messkopf verfahren wird. Ferner sind auch Vorrichtungen gemeint, bei denen der Messkopf selber über die Probe verfahren wird. Vorzugsweise ist die Messfläche innerhalb eines ersten Endes der länglich ausgebildeten Anregungsfläche angeordnet, so dass die Anregungsfläche der Messfläche in Verfahrrichtung vorauseilt. Hierdurch wird bewirkt, dass ein Teil der zu vermessenden Strecke im Vorfeld angeregt wird, so dass sowohl eine homogene als auch eine hohe Anregung entlang der Messtrecke erreicht werden. Auf diese Art und Weise können Relativgeschwindigkeiten von 1 bis 200 m/min erzielt werden.

Vorteilhafterweise weichen die Extrema der Intensität der Anregungsfläche höchstens um 50 %, vorzugsweise höchstens um 20 % und besonders vorzugsweise höchstens um 10 % vom Intensitätsmittelwert der Anregungsfläche ab. Extrema im Sinne der Erfindung sind Maxima und Minima im mathematischen Sinne. Allerdings werden die Extrema am Rand der Anregungsfläche nicht zur Berechnung des obigen Verhältnisses herangezogen. Gemäß einer bevorzugten Ausführungsform ist ein Intensitätsgradient am Rande der Anregungsfläche geringer als 20%, vorzugsweise geringer als 10%, besonders vorzugsweise geringer als 5% und idealerweise geringer als 2%. Der Begriff "Intensitätsgradient" meint, dass die Anregungsfläche in 10x10 gleichgroße Flächenstücke aufgeteilt wird, wobei der Intensitätsmittelwert jedes einzelnen der 36 äußeren Flächenstücke um nicht mehr als 20% bzw. 10% bzw. 5% bzw. 2% von dem Intensitätsmittelwert jedes anderen der 36 Flächenstücke abweicht. Den angegebenen Verhältnissen liegt die Erkenntnis zugrunde, dass Schwankungen innerhalb der genannten Verhältnisse für die Zuverlässigkeit noch tolerabel bzw. vorteilhaft oder sehr vorteilhaft sind.

Erfindungsgemäß ist die wenigstens eine Anregungslichtquelle eine Leuchtdiode und vorzugsweise eine Nahinfrarot- oder UV-Leuchtdiode. Zweckmäßigerweise ist die Leuchtdiode ein Kantenemitter. Bevorzugt ist die Anregungslichtquelle inkohärent, ist also kein Laser. Dem liegt die Erkenntnis zugrunde, dass Leuchtdioden in Form von Kantenemittern verhältnismäßig große Kantenlängen aufweisen (Millimeter statt Mikrometer wie bei Laserdioden), so dass die Abbildungen dieser aktiv leuchtenden Flächen im Fokus dementsprechend groß sind, was wiederum zu einer entsprechend großen Anregungsfläche führt. Ferner führt eine große Abbildung im Fokus außerdem auch zu einer großen Rayleighlänge, wodurch die Schwankungsunempfindlichkeit in Strahlrichtung vergrößert wird. Folglich ist die Wahl von Leuchtdioden in Form von Kantenemitten besonders vorteilhaft, weil sie sowohl die Schwankungsunempfindlichkeit in Strahlrichtung als auch die Schwankungsunempfindlichkeit entlang der Probenoberfläche vergrößern. Vorzugsweise beträgt die Rayleighlänge des Anregungslichtes 1 mm bis 20 mm und weiter vorzugsweise 1 mm bis 10 mm.

Gemäß einer bevorzugten Ausführungsform beträgt die Messfläche 0,2 bis 50 mm², vorzugsweise 0,5 bis 20 mm² und besonders vorzugsweise 1 bis 10 mm². Diesem Aspekt liegt die Erkenntnis zugrunde, dass die Wahl der Messfläche einen Kompromiss darstellt. Ist die Messfläche zu klein gewählt, so spielen Unregelmäßigkeiten von Schichtdicken eine immer größere Rolle, was dazu führen kann, dass bereits eine sehr kleine Verschiebung der Messfläche auf der Probe aufgrund einer Änderung der Schichtdicke zu unterschiedlichen Ergebnissen führt. Dies hat eine erhöhte Unzuverlässigkeit zur Folge. Ist die Messfläche hingegen im erfindungsgemäßen Bereich, so wird die Schichtdicke über diesen Bereich gemittelt, was einen deutlich aussagekräftigeren, weil stabileren Wert ergibt. Wird die Messfläche noch größer, so wird die Ortsauflösung jedoch zu ungenau.

Es ist vorteilhaft, dass die Anregungsfläche wenigstens um den Faktor 2, vorzugsweise um den Faktor 5 und besonders vorzugsweise um den Faktor 10 größer ist als die Messfläche. Der Wahl dieses Verhältnisses liegt die Erkenntnis zugrunde, dass hierdurch besonders zuverlässige Messergebnisse erreicht werden.

Gemäß einer besonders bevorzugten Ausführungsform ist der Messkopf zur Führung mit der Hand geeignet. Der Ausdruck "zur Führung mit der Hand geeignet" bedeutet, dass der Messkopf von Größe und Gewicht nicht nur von der Hand gehalten werden kann, sondern zugleich auch einige wenige Sekunden ruhig gegenüber einer Probe gehalten werden kann. Folglich scheiden Messköpfe aus, welche zwar einen Griff aufweisen, aber beispielsweise zu schwer sind, um ruhig vor einer Probe gehalten werden zu können. Ebenso scheiden Messköpfe aus, welche zwar sehr leicht, dafür aber sehr voluminös sind. Vielmehr kommen als Messköpfe Gegenstände in Betracht, welche von Größe und Gewicht beispielsweise einen Stift, einer Maus, einer Pistole oder einer Taschenlampe entsprechen.

Es liegt im Rahmen der Erfindung, dass das fotothermische Messgerät eine Mehrzahl von Anregungslichtquellen und bevorzugt wenigstens zwei, weiter bevorzugt wenigstens drei und ganz besonders bevorzugt wenigstens fünf Anregungslichtquellen aufweist. Gemäß einer speziellen Ausführungsform weist das fotothermische Messgerät sechs Anregungslichtquellen auf. Dem liegt die Erkenntnis zugrunde, dass mit mehreren Anregungslichtquellen einerseits mehr optische Leistung erzeugt werden kann und andererseits die optische Leistung noch etwas gleichmäßiger verteilt werden kann.

Es ist vorteilhaft, dass die Leistungsdichte des Anregungslichtes in der Anregungsfläche zwischen 1 und 100 mW/mm² und bevorzugt zwischen 10 und 100mW/mm² beträgt. Diesem Aspekt liegt die Erkenntnis zugrunde, dass hierdurch besonders zuverlässige Ergebnisse gewährleistet werden. Es ist zweckmäßig, dass die Messzeit einer fotothermischen Messung 0,02 bis 10 s, vorzugsweise 0,05 bis 5 s und besonders vorzugsweise 0,1 bis 3 s entspricht.

Wenn der Fokus des Anregungslichtes 5 bis 150 mm, bevorzugt 10 bis 80 mm und besonders bevorzugt 25 bis 40 mm von dem Linsensystem beabstandet ist, wird insbesondere dem Nutzungsverhalten bei der Führung mit der menschlichen Hand Rechnung getragen. So wurde gefunden, dass zu große Abstände für den Nutzer schwierig einzuschätzen sind; hingegen bedingen zu kurze Abstände die Gefahr der versehentlichen Berührung.

Gemäß einer besonders bevorzugten Ausführungsform umfasst das fotothermische Messgerät ein Abstandsmessgerät. Das Abstandsmessgerät ist vorzugsweise in der Lage, automatisch Abstandsmessungen zwischen dem Messkopf und der Probe vorzunehmen. Es ist bevorzugt, dass das Abstandsmessgerät eine Vielzahl von Abständen messen kann. Vorzugsweise ist das Abstandsmessgerät für eine beliebige Methode zur berührungsfreien Abstandsmessung ausgelegt. Gemäß bevorzugten Ausführungsformen werden die Abstände mittels Auswertungen von Wellen, beispielsweise Schall-, Funk- und Lichtwellen, erfasst. Vorzugsweise arbeitet das Abstandsmessgerät nach einem optischen Verfahren, also mit Lichtwellen. Weiter vorzugsweise ermittelt das Abstandsmessgerät nach einem der optischen Verfahren der Triangulation, der Laufzeitmessung oder der Phasenverschiebungsmessung die Abstände. Dabei ist das Verfahren der optischen Triangulation bevorzugt. Besonders vorteilhafterweise wird das Licht des Abstandsmessgerätes über das Linsensystem auf die Probe geworfen und von dort wieder über das Linsensystem eingefangen. Diesem Aspekt liegt die Erkenntnis zugrunde, dass mithilfe eines Abstandsmessgerätes automatische Abstandsmessungen möglich sind, wodurch die fotothermische Messung zum richtigen Zeitpunkt ausgelöst wird. Dadurch wird die Schwankungsunempfindlichkeit in Strahlrichtung verringert. Außerdem kann mithilfe des Abstandsmessgerätes ein Schwankungsprofil in Strahlrichtung erstellt werden, mit dessen Hilfe das gemessene Intensitätsprofil korrigiert werden kann. Hierdurch kann die Schwankungsunempfindlichkeit in Strahlrichtung auf ein Mindestmaß verringert werden.

Vorteilhafterweise ist der optische Pfad des Anregungslichtes von dem optischen Pfad der Wärmestrahlung entkoppelt. Dabei bedeutet der Begriff "entkoppelt", dass einige Optiken hauptsächlich vom Anregungslicht, und andere Optiken hauptsächlich von der Wärmestrahlung durchlaufen werden. Dies erlaubt die Optimierung der Optiken auf das jeweilige Licht hinsichtlich der Wellenlänge.

Gemäß einer besonders bevorzugten Ausführungsform weist das Linsensystem eine Ringlinse auf, welche eine erste Strahlachse definiert. Es ist zweckmäßig, dass das Linsensystem eine Infrarot-Linse umfasst. Vorteilhafterweise ist die Infrarot-Linse mit einer zweiten Strahlachse im Ringloch der Ringlinse angeordnet. Bevorzugt liegt die zweite Strahlachse auf der ersten Strahlachse. Vorteilhafterweise definiert die Infrarot-Linse zusammen mit dem Infrarot-Detektor die Messfläche. Ganz besonders bevorzugt fokussiert die Ringlinse das Anregungslicht. Es ist zweckmäßig, dass die Ringlinse die Anregungslichtstrahlen einander im Fokus überlagert. Weiterhin ist es vorteilhaft, dass die Ringlinse sphärisch ist. Dem Aspekt der Ringlinse liegen verschiedene Erkenntnisse zugrunde. So ermöglicht die Ringlinse, dass die Infrarot-Linse im Ringloch ein Maximum an Wärmestrahlung einsammeln kann, wodurch die Zuverlässigkeit der Messung bzw. die Messgeschwindigkeit erhöht wird. Ferner erlaubt die Ringlinse eine konzentrische Anordnung der Anregungslichtquellen um die Strahlachse herum, wodurch eine verhältnismäßig homogene Ausleuchtung der Anregungsfläche erzielt wird. Das Übereinanderliegen der Fokusse resultiert in einer besonders schwankungsunempfindlichen Messung in Strahlrichtung. Ist die Ringlinse sphärisch, so vergrößert sich die Aberration im Fokus, wodurch die Rayleighlänge und damit die Schwankungsunempfindlichkeit in Strahlrichtung vergrößert wird.

Gemäß einer bevorzugten Ausführungsform umfasst das fotothermische Messgerät wenigstens eine, vorzugsweise zwei und besonders vorzugsweise drei Pilotlichtquellen. Bevorzugt zeigt bzw. zeigen die Pilotlichtquellen auf den Ort der fotothermischen Messung auf der Probe. Weiter bevorzugt zeigen die Pilotlichtquellen den Messabstand an, indem die Strahlen der Pilotlichtquellen einander im Fokus schneiden. Die Pilotlichtquellen sind vorteilhafterweise Leuchtdioden, welche zweckmäßigerweise eine Wellenlänge im sichtbaren roten Spektrum aufweisen. Ganz besonders bevorzugt werden auch die Lichtstrahlen der Pilotlichtquellen durch das Linsensystem und insbesondere durch die Ringlinse fokussiert und treffen im Fokus des Linsensystems bzw. der Ringlinse aufeinander. Diesem Aspekt liegt die Erkenntnis zugrunde, dass hierdurch eine für den Nutzer sichtbare Positionsanzeige für den korrekten Messabstand ermöglicht wird. Dabei erlaubt eine Pilotlichtquelle zumindest die Anzeige der Strahlrichtung, wohingegen zwei einander schneidende Pilotlichtstrahlen bereits einen bestimmten Ort im dreidimensionalen Raum und damit beispielsweise auch den Fokus der Ringlinse bzw. des Linsensystems anzeigen können. Der dritte Pilotlichtstrahl schließlich ermöglicht eine bessere Sichtbarkeit des Schnittpunktes.

Zweckmäßigerweise weist der optische Pfad des Anregungslichtes wenigstens einen Kollimator und bevorzugt für jede Anregungslichtquelle einen zugehörigen Kollimator auf. Dem liegt die Erkenntnis zugrunde, dass hierdurch das Linsensystem flexibler ist und somit die Lichtstrahlen bedarfsgerechter geformt werden können. Es ist vorteilhaft, wenn der optische Pfad des Anregungslichtes wenigstens einen Diffusor und bevorzugt für jede Anregungslichtquelle einen Diffusor aufweist. Besonders bevorzugt ist ein holografischer Diffusor. Dem liegt die Erkenntnis zugrunde, dass die Anregungslichtstrahlen hierdurch gestreut werden, wodurch wiederum die Anregungsfläche und die Rayleighlänge vergrößert werden.

Die Erfindung lehrt zur Lösung des technischen Problems ein Verfahren zur fotothermischen Messung nach Anspruch 14.

Nachfolgend wird die Erfindung anhand einer ein Ausführungsbeispiel darstellenden Zeichnung näher erläutert. Es zeigen in schematischer Darstellung:
- **Fig. 1**: eine perspektivische Ansicht eines erfindungsgemäßen fotothermischen Messgerätes bei der Anwendung.
- **Fig. 2**: einen Längsschnitt durch einen Messkopf des fotothermischen Messgerätes aus Fig. 1,
- **Fig. 3**: eine Vorderansicht des Messkopfes aus den Fig. 1 und 2,
- **Fig. 4A**: eine erste Variante einer Anregungsfläche des Messkopfes der Fig. 1 bis 3,
- **Fig. 4B**: eine weitere Variante der Anregungsfläche des Messkopfes aus den Fig. 1 bis 3.

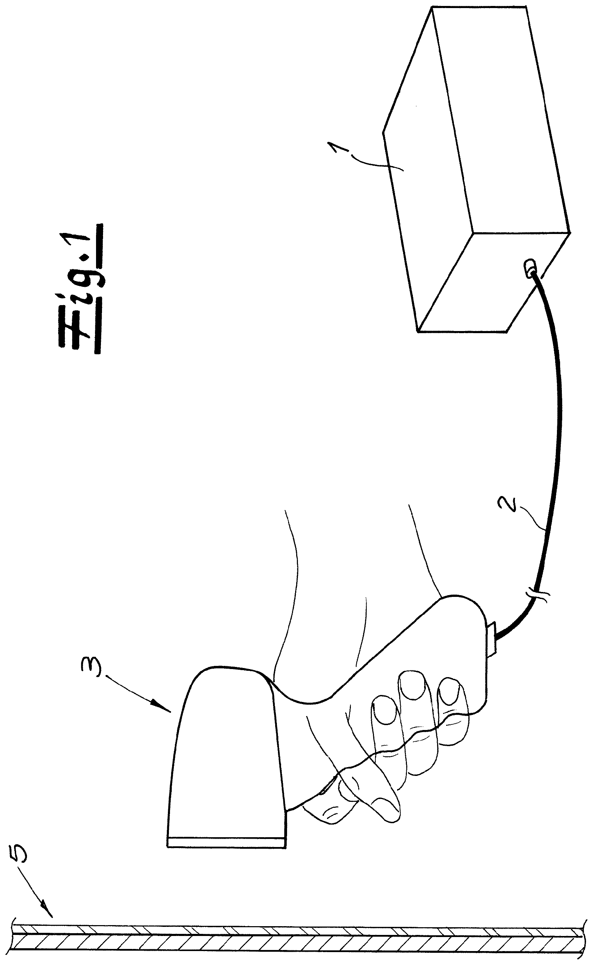

Fig. 1 zeigt das erfindungsgemäße fotothermische Messgerät in einer vereinfachenden Darstellung. Das fotothermische Messgerät umfasst eine Grundeinheit 1, ein Kabel 2 sowie einen mit der Hand führbaren Messkopf 3. Dabei werden die Grundeinheit 1 und der Messkopf 3 mit dem Kabel 2 miteinander verbunden. Im vorliegenden Ausführungsbeispiel umfasst die Grundeinheit eine nicht dargestellte Spannungsversorgung sowie eine nicht dargestellte Recheneinheit. Ferner sind an der Grundeinheit 1 nicht dargestellte Schnittstellen vorgesehen, mit welchen die Grundeinheit 1 an Rechner bzw. Ein- und Ausgabegeräte angeschlossen werden kann. Der Messkopf 3 weist einen ergonomischen Griff auf, an welchem einends das Kabel 2 befestigt ist und an welchem anderenends die für die fotothermische Messung maßgeblichen optischen Komponenten angeordnet sind. Aufgrund der Abmessungen und des Gewichts des Messkopfes 3 ist das fotothermische Messgerät besonders gut zur manuellen Messung geeignet. Ein typischer Anwendungsfall ist die fertigungsnahe Qualitätsüberprüfung von Lackpulverschichten auf Metall vor dem Einbrennvorgang. Eine solche mehrschichtige Probe ist mit dem Bezugszeichen 5 angedeutet.

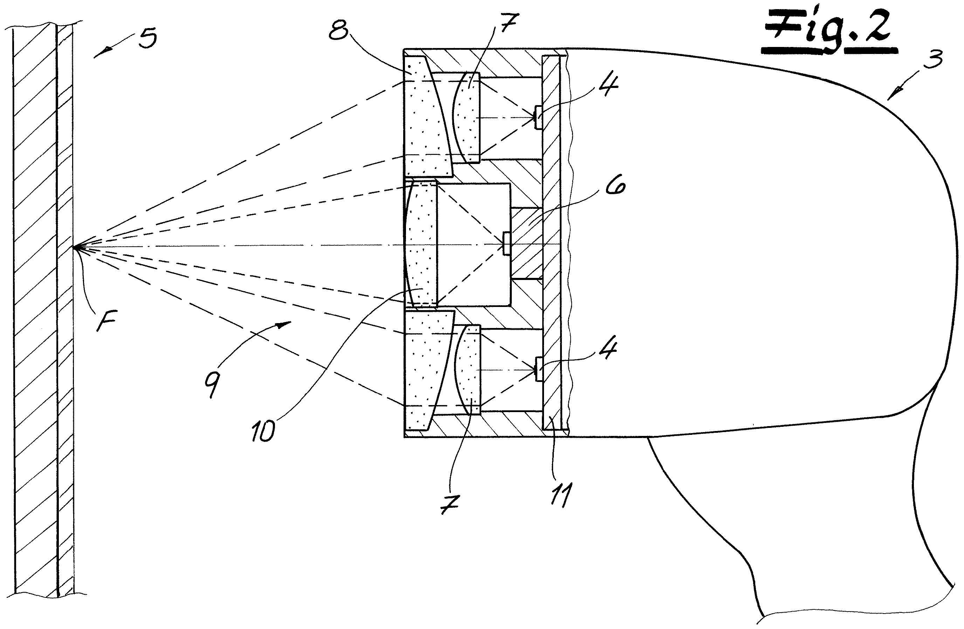

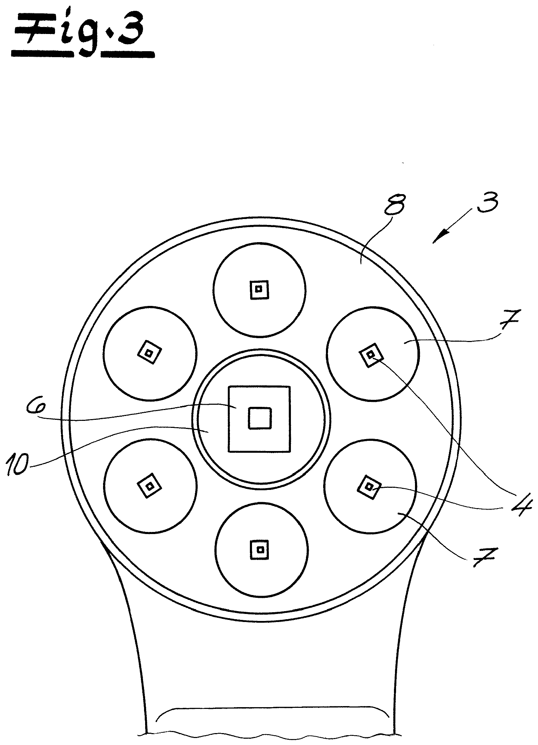

Der Längsschnitt in Fig. 2 verdeutlicht die Strahlengänge zwischen Messkopf 3 und Probe 5 und ist in Verbindung mit der Vorderansicht des Messkopfes 3 aus Fig. 3 zu sehen. Die von der Spannungsversorgung über das Kabel 2 an eine Platine 11 herangeführte elektrische Leistung wird über die Platine 11 weiter an insgesamt sechs Anregungslichtquellen 4 sowie an einen Infrarot-Detektor 6 verteilt. Im Falle der Anregungslichtquellen handelt es sich um Nahinfrarot-Leuchtdioden mit einer Kantenlänge im Millimeter-Bereich. Das divergent aus den Anregungslichtquellen 4 austretende Anregungslicht trifft zunächst auf einen der jeweiligen Anregungslichtquelle 4 zugeordneten Kollimator 7, wodurch die divergenten Anregungslichtstrahlen kollimiert werden. Durch eine Ringlinse 8 werden die kollimierten Anregungslichtstrahlen auf die Probe 5 in einem Fokuspunkt F fokussiert. Dabei wird nicht nur der jeweilige Anregungslichtstrahl der sechs Anregungslichtquellen 4 gebündelt, sondern darüber hinaus werden auch noch die sechs Anregungslichtstrahlen im Fokus F einander überlagert. Im Fokus F erwärmt sich die Probe 5, so dass sie Wärmestrahlung emittiert. Diese Wärmestrahlung wird mittels einer Infrarot-Linse 10 eingesammelt und auf den Infrarot-Detektor 6 fokussiert. Zusammen mit den Kollimatoren 7 und der Ringlinse 8 bildet die Infrarot-Linse 10 ein Linsensystem 9.

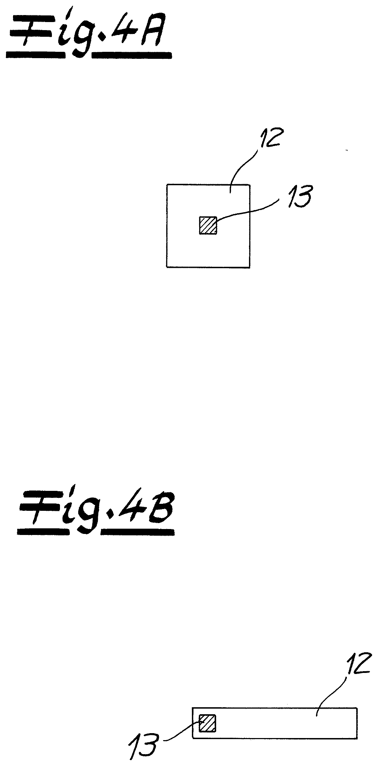

Aufgrund einer Rayleighlänge von +/- 5 mm um den Fokus F herum ist auch der zugehörige nutzbare Messabstandsbereich entsprechend groß und die Messung bezüglich Positionierung des Messkopfes 3 in Strahlrichtung dementsprechend tolerant. Die Anregungsfläche 12 im Fokusbereich ist in Fig. 4A über 10 x 10 mm ausgedehnt. Damit wird die Messfläche 13 von etwa 2 x 2 mm deutlich überstrahlt, wodurch Verwacklungen des Messkopfes 3 entlang der Probenoberfläche gut ausgeglichen werden können. Wichtig hierfür ist auch eine homogene Intensitätsverteilung über der Anregungsfläche, welche in dem Ausführungsbeispiel ein Schwankungsverhältnis (Extrema zum Mittelwert) von höchstens 20 % aufweist. In einer in Fig. 4B dargestellten zweiten Variante sind die Anregungslichtquellen 4 und die das Anregungslicht betreffenden Optiken so dimensioniert bzw. ausgerichtet, dass die Anregungsfläche 12 länglich ausgebildet ist und das fotothermische Messgerät entsprechend gut für hohe maschinell bedingte Relativgeschwindigkeiten geeignet ist. Die Anregungsfläche 12 dieser Variante weist eine Fläche von 3 x 20 mm auf. Die Messfläche 13 hingegen ist über 2 x 2 mm ausgedehnt.

Zwecks manueller Messung der Schichtdicke an der Probe 5 führt der Anwender den Messkopf 3 an die Probe 5 heran. Wie oben beschrieben, ist die Rayleighlänge mit +/- 5 mm recht groß, so dass die Abstandsfindung für den Anwender kein Problem darstellt. Daraufhin löst der Anwender, beispielsweise mittels eines Knopfes im Bereich des Griffes, die fotothermische Messung aus, wodurch die Anregungslichtquellen 4 einen Lichtpuls mit einer u. a. probenabhängigen Dauer von 0,1 bis 3 Sekunden emittieren. Aufgrund des Lichtpulses erwärmt sich die Probe 5, was eine Abstrahlung von Wärmestrahlung zur Folge hat. Der Infrarot-Sensor 6 ermittelt u.a. den Anstieg und das Abklingen der über die Infrarot-Linse 10 eingesammelten Wärmestrahlung. Ein solcherart gewonnenes Intensitätsprofil der Wärmestrahlung über der Zeit wird in einem weiteren Schritt digitalisiert. In einem letzten Schritt werden dann die digitalisierten Intensitätswerte der Wärmestrahlung zu der Recheneinheit übertragen, wo die Schichtdicken der Probe 5 berechnet werden. Der gemessene Intensitätsverlauf wird dort mit dem charakteristischen Verhalten des erwarteten Materials durch die Recheneinheit verglichen. Über einen derartigen Referenzabgleich kann dann die Schichtdicke abgeleitet werden.

## Patentansprüche

1. Fotothermisches Messgerät, umfassend wenigstens eine Anregungslichtquelle (4) zur Erwärmung einer Probe (5),
einen Infrarot-Detektor (6) zur Detektion von Wärmestrahlung der erwärmten Probe (5) und einen Messkopf (3),
wobei der Messkopf (3) ein Linsensystem (9) zur Bündelung des Anregungslichtes auf der Probe (5) sowie zur Sammlung der von der Probe (5) ausgehenden Wärmestrahlung aufweist,
wobei das Linsensystem (9) einen Fokus (F) des Anregungslichtes bestimmt, wobei das Linsensystem (9) und der Infrarot-Detektor (6) eine Messfläche (13) definieren, **dadurch gekennzeichnet,**
**dass** die wenigstens eine Anregungslichtquelle (4) eine Leuchtdiode ist, wobei die Anregungsfläche (12) 8 mm² bis 200 mm² beträgt.

2. Fotothermisches Messgerät nach Anspruch 1, wobei die Extrema der Intensität der Anregungsfläche (12) höchstens um 50 %, vorzugsweise höchstens um 20 % und besonders vorzugsweise höchstens um 10 % vom Intensitätsmittelwert der Anregungsfläche (12) abweichen.

3. Fotothermisches Messgerät nach Anspruch 1 oder 2, ein Intensitätsgradient am Rande der Anregungsfläche (12) geringer als 20%, vorzugsweise geringer als 10% und besonders vorzugsweise geringer als 5% ist.

4. Fotothermisches Messgerät nach einem der Ansprüche 1 bis 3, wobei die Messfläche (13) 0,2 bis 50 mm², vorzugsweise 0,5 bis 20 mm² und besonders vorzugsweise 1 bis 10 mm² groß ist.

5. Fotothermisches Messgerät nach einem der Ansprüche 1 bis 4, wobei die Anregungsfläche (12) wenigstens um den Faktor 2, vorzugsweise um den Faktor 5 und besonders vorzugsweise um den Faktor 10 größer ist als die Messfläche (13).

6. Fotothermisches Messgerät nach einem der Ansprüche 1 bis 5, wobei der Messkopf (3) zur Führung mit der Hand geeignet ist.

7. Fotothermisches Messgerät nach einem der Ansprüche 1 bis 6, wobei das fotothermische Messgerät eine Mehrzahl von Anregungslichtquellen (4) aufweist.

8. Fotothermisches Messgerät nach einem der Ansprüche 1 bis 7, wobei die Intensität des Anregungslichtes in der Anregungsfläche (12) zwischen 1 mW/mm² und 100mW/mm² und bevorzugt zwischen 10 mW/mm² und 100 mW/mm² liegt.

9. Fotothermisches Messgerät nach einem der Ansprüche 1 bis 8, wobei das fotothermische Messgerät ein Abstandsmessgerät umfasst.

10. Fotothermisches Messgerät nach einem der Ansprüche 1 bis 9, wobei der optische Pfad des Anregungslichtes von dem optischen Pfad der Wärmestrahlung entkoppelt ist.

11. Fotothermisches Messgerät nach einem der Ansprüche 1 bis 10, wobei das Linsensystem (9) eine Ringlinse (8) aufweist, welche eine erste Strahlachse definiert.

12. Fotothermisches Messgerät nach einem der Ansprüche 1 bis 11, wobei das fotothermische Messgerät wenigstens eine, vorzugsweise zwei und besonders vorzugsweise drei Pilotlichtquellen umfasst.

13. Fotothermisches Messgerät nach einem der Ansprüche 1 bis 12, wobei das Linsensystem (9) wenigstens einen Kollimator (7) aufweist.

14. Verfahren zur fotothermischen Messung, mit einem fotothermischen Messgerät insbesondere gemäß einem der Ansprüche 1 bis 13, wobei das fotothermische Messgerät einen Messkopf (3), wenigstens eine Anregungslichtquelle (4) und einen Infrarot-Detektor (6) umfasst,
wobei der Messkopf (3) ein Linsensystem (9) aufweist, wobei das Linsensystem (9) einen Fokus (F) des Anregungslichtes bestimmt, wobei das Linsensystem (9) und der Infrarot-Detektor (6) eine Messfläche (13) definieren,
wobei die wenigstens eine Anregungslichtquelle (4) Anregungslicht ausstrahlt, wobei das Linsensystem (9) das Anregungslicht auf die Probe (5) bündelt, wobei sich die Probe (5) aufgrund des Anregungslichtes erwärmt,
wobei das Linsensystem (9) die von der Probe (5) ausgehende Wärmestrahlung einsammelt, wobei der Infrarot-Detektor (6) die eingesammelte Wärmestrahlung detektiert, wobei die detektierte Wärmestrahlung in eine Schichtdicke umgerechnet wird,
**dadurch gekennzeichnet, dass**
die wenigstens eine Anregungslichtquelle (4) eine Leuchtdiode ist, wobei die Anregungsfläche (12) 8 mm² bis 200 mm² beträgt.

## Claims

1. A photothermal measuring device, comprising at least one excitation light source (4) for heating a sample (5),
an infrared detector (6) for detecting thermal radiation of the heated sample (5) and a measuring head (3),
wherein the measuring head (3) has a lens system (9) for bundling the excitation light on the sample (5) as well as for collecting the thermal radiation emitted from the sample (5),
wherein the lens system (9) determines a focus (F) of the excitation light,
wherein the lens system (9) and the infrared detector (6) define a measuring surface (13), **characterized in that**
the at least one excitation light source (4) is a light-emitting diode, wherein the excitation surface (12) measures 8 mm² to 200 mm².

2. The photothermal measuring device according to claim 1, wherein the extremes of intensity of the excitation surface (12) deviate from the average intensity of the excitation surface (12) by at most 50%, preferably by at most 20%, and especially preferably by at most 10%.

3. The photothermal measuring device according to claim 1 or 2, wherein an intensity gradient at the edge of the excitation surface (12) is less than 20%, preferably less than 10%, and especially preferably less than 5%.

4. The photothermal measuring device according to one of claims 1 to 3, wherein the measuring surface (13) is 0.2 to 50 mm², preferably 0.5 to 20 mm², and especially preferably 1 to 10 mm² large.

5. The photothermal measuring device according to one of claims 1 to 4, wherein the excitation surface (12) is larger than the measuring surface (13) by at least a factor of 2, preferably by a factor of 5, and especially preferably by a factor of 10.

6. The photothermal measuring device according to one of claims 1 to 5, wherein the measuring head (3) is suitable to be guided by hand.

7. The photothermal measuring device according to one of claims 1 to 6, wherein the photothermal measuring device has a plurality of excitation light sources (4).

8. The photothermal measuring device according to one of claims 1 to 7, wherein the intensity of the excitation light in the excitation surface (12) lies between 1 mW/mm² and 100 mW/mm², and preferably between 10 mW/mm² and 100 mW/mm².

9. The photothermal measuring device according to one of claims 1 to 8, wherein the photothermal measuring device comprises a distance measuring device.

10. The photothermal measuring device according to one of claims 1 to 9, wherein the optical path of the excitation light is decoupled from the optical path of the thermal radiation.

11. The photothermal measuring device according to one of claims 1 to 10, wherein the lens system (9) has a ring lens (8), which defines a first beam axis.

12. The photothermal measuring device according to one of claims 1 to 11, wherein the photothermal measuring device comprises at least one, preferably two, and especially preferably three pilot light sources.

13. The photothermal measuring device according to one of claims 1 to 12, wherein the lens system (9) has at least one collimator (7).

14. A method for photothermal measurement, with a photothermal measuring device in particular according to one of claims 1 to 13, wherein the photothermal measuring device comprises a measuring head (3), at least one excitation light source (4) and an infrared detector (6),
wherein the measuring head (3) has a lens system (9), wherein the lens system (9) determines a focus (F) of the excitation light, wherein the lens system (9) and the infrared detector (6) define a measuring surface (13),
wherein the at least one excitation light source (4) radiates excitation light,
wherein the lens system (9) bundles the excitation light on the sample (5),
wherein the sample (5) is heated by the excitation light,
wherein the lens system (9) collects the thermal radiation emitted by the sample (5), wherein the infrared detector (6) detects the collected thermal radiation, wherein the detected thermal radiation is converted into a layer thickness,
**characterized in that**
the at least one excitation light source (4) is a light-emitting diode, wherein the excitation surface (12) measures 8 mm² to 200 mm².

## Revendications

1. Instrument de mesure photothermique, comprenant au moins une source lumineuse d'excitation (4), destinée à chauffer un échantillon (5),
un détecteur à infrarouge (6), destiné à détecter un rayonnement thermique de l'échantillon (5) chauffé et une tête de mesure (3),
la tête de mesure (3) comportant un système de lentille (9), destiné à focaliser la lumière d'excitation sur l'échantillon (5) et à recueillir le rayonnement thermique émanant de l'échantillon (5),
le système de lentille (9) déterminant un foyer (F) de la lumière d'excitation, le système de lentille (9) et le détecteur à infrarouge (6) définissant une surface de mesure (13), **caractérisé en ce que**
l'au moins une source lumineuse d'excitation (4) est une diode électroluminescente, la surface d'excitation (12) étant de 8 mm² à 200 mm².

2. Instrument de mesure photothermique selon la revendication 1, les extrema de l'intensité de la surface d'excitation (12) divergeant d'un maximum de 50 %, de préférence d'un maximum de 20 % et de manière particulièrement préférentielle d'un maximum de 10 % de la valeur moyenne d'intensité de la surface d'excitation (12).

3. Instrument de mesure photothermique selon la revendication 1 ou 2, un gradient d'intensité au bord de la surface d'excitation (12) étant inférieur à 20 %, de préférence, inférieur à 10 % et de manière particulièrement préférentielle, inférieur à 5 %.

4. Instrument de mesure photothermique selon l'une quelconque des revendications 1 à 3, la surface de mesure (13) ayant une dimension de 0,2 à 50 mm², de préférence de 0,5 à 20 mm² et de manière particulièrement préférentielle, de 1 à 10 mm².

5. Instrument de mesure photothermique selon l'une quelconque des revendications 1 à 4, la surface d'excitation (12) étant supérieure d'au moins le coefficient 2, de préférence du coefficient 5 et de manière particulièrement préférentielle, du coefficient 10 à la surface de mesure (13).

6. Instrument de mesure photothermique selon l'une quelconque des revendications 1 à 5, la tête de mesure (3) étant apte à être guidée à la main.

7. Instrument de mesure photothermique selon l'une quelconque des revendications 1 à 6, l'instrument de mesure photothermique comportant une multiplicité de sources lumineuses d'excitation (4).

8. Instrument de mesure photothermique selon l'une quelconque des revendications 1 à 7, l'intensité de la lumière d'excitation dans la surface d'excitation (12) se situant entre 1 mW/mm² et 100mW/mm² et de préférence entre 10 mW/mm² et 100 mW/mm².

9. Instrument de mesure photothermique selon l'une quelconque des revendications 1 à 8, l'instrument de mesure photothermique comprenant un distancemètre.

10. Instrument de mesure photothermique selon l'une quelconque des revendications 1 à 9, le chemin optique de la lumière d'excitation étant désaccouplé du chemin optique du rayonnement thermique.

11. Instrument de mesure photothermique selon l'une quelconque des revendications 1 à 10, le système de lentille (9) comportant une lentille annulaire (8), laquelle définit un premier axe de faisceau.

12. Instrument de mesure photothermique selon l'une quelconque des revendications 1 à 11, l'instrument de mesure photothermique comprenant au moins une, de préférence deux et de manière particulièrement préférentielle trois sources lumineuses pilotes.

13. Instrument de mesure photothermique selon l'une quelconque des revendications 1 à 12, le système de lentille (9) comportant au moins un collimateur (7).

14. Procédé de mesure photothermique à l'aide d'un instrument de mesure photothermique, notamment selon l'une quelconque des revendications 1 à 13, l'instrument de mesure photothermique comprenant une tête de mesure (3), au moins une source lumineuse d'excitation (4) et un détecteur à infrarouge (6),
la tête de mesure (3) comportant un système de lentille (9), le système de lentille (9) déterminant un foyer (F) de la lumière d'excitation, le système de lentille (9) et le détecteur à infrarouge (6) définissant une surface de mesure (13),
l'au moins une source lumineuse d'excitation (4) émettant de la lumière d'excitation, le système de lentille (9) focalisant la lumière d'excitation sur l'échantillon (5), l'échantillon (5) chauffant sous l'effet de la lumière d'excitation,
le système de lentille (9) recueillant le rayonnement thermique qui émane de l'échantillon (5), le détecteur à infrarouge (6) détectant le rayonnement thermique recueilli, le rayonnement thermique détecté étant converti en une épaisseur de couche,
**caractérisé en ce que**
l'au moins une source lumineuse d'excitation (4) est une diode électroluminescente, la surface d'excitation (12) étant de 8 mm² à 200 mm².
